# EUROPÄISCHE PATENTSCHRIFT

(11) **EP 1 622 473 B1**
(45) Veröffentlichungstag und Bekanntmachung des Hinweises auf die Patenterteilung: **14.11.2007**
(21) Anmeldenummer: 04729394.9
(22) Anmeldetag: 26.04.2004
(51) Int. Cl.: A23L 3/30, A23L 3/28, A23L 3/3409, A23L 3/358, A23B 7/015, A23B 7/144, A23B 7/157

(54) **VERFAHREN UND TECHNISCHE AUSFÜ HRUNG ZUR DESINFEKTION UND HAL TBARMACHUNG VON LEBENSMITTELN UND ANDEREN PRODUKTEN MITTELS O3 , O2 , CO2 ARGON, UV-C LICHT UND ULTRASCHALL IM VAKUUM**
METHOD AND EQUIPMENT EMBODIMENT FOR DISINFECTION AND PRESERVATION OF FOODSTUFFS AND OTHER PRODUCTS BY MEANS OF O3, O2 , CO2 ARGON, UV-C LIGHT AND ULTRASOUND IN VACUO
PROCEDE ET FORME DE REALISATION TECHNIQUE POUR LA DESINFECTION ET LA CONSERVATION D'ALIMENTS ET D'AUTRES PRODUITS A L'O3 , A L'O2 , AU CO2 A L'ARGON, A LA LUMIERE UV-C ET PAR ULTRASON SOUS VIDE

(30) Priorität: 25.04.2003 CH 741032003
(43) Veröffentlichungstag der Anmeldung: 08.02.2006
(73) Patentinhaber: Steffen, Hanspeter, 3427 Utzenstorf (CH)
(72) Erfinder: Steffen, Hanspeter, 3427 Utzenstorf (CH)
(74) Vertreter: Rüfenacht, Philipp Michael
(86) Internationale Anmeldenummer: PCT/CH2004/000253
(87) Internationale Veröffentlichungsnummer: WO 2004/095953

(56) Entgegenhaltungen:
- WO-A-01/89310
- US-A1- 2002 090 430
- US-A1- 2003 013 401
- US-B1- 6 171 548

## Beschreibung

### TECHNISCHES GEBIET

Die Erfindung betrifft ein neues Desinfektionsverfahren und die Technische Ausführung für die Kaltsterilisation und Haltbarmachung von Früchten, Gemüse, Blumen, Landwirtschaftlichen und Gärtnerischen Produkten, Lebensmitteln und anderen Produkten mittels Vakuum - Technologie, Ozon, Sauerstoff, Kohlendioxyd, Argon, UV-C Licht - Strahlung und Ultraschall, gemäss dem Oberbegriff der unabhängigen Patentansprüche.

### STAND DER TECHNIK

Mit dem Vormarsch des Biologischen Landbaus in der Landwirtschaft ergeben sich weltweit wegen der intensiven Verwendung von tierischen Exkrementen und tierischen Beiprodukten zur Düngung und der Abstinenz von Fungiziden, Bakteriziden und Pestiziden vermehrt Probleme bezüglich der mikrobiellen Belastung landwirtschaftlicher Erzeugnisse und Lebensmittel.

In den letzten Jahren nahmen die Erkrankungen, verursacht durch mikrobiell verunreinigte Lebensmittel weltweit stark zu.

Erreger, wie Salmonella, Shighella, Listerien, E. Coli und Enterohbakterien auf Früchten und Gemüse verursachen in vermehrtem Masse infektiöse Erkrankungen bei Konsumenten.

Gleichzeitig nimmt gemäss Geheimdienst - Erklärungen, die Wahrscheinlichkeit eines Terroranschlages über die Lebensmittelkette mittels Mikroorganismen wie zum Beispiel Antrax, Botulinum etc. beträchtlich zu.
Die entsprechenden präventiven Massnahmen zur Dekontamination und Desinfektion und für eine Verpackung unter Verschluss von frischen Früchten und Gemüse und anderen Frisch - Lebensmitteln drängt sich deshalb auf, um die Lebensmittelsicherheit bei Frischprodukten für Konsumenten zu garantieren.
Bis heute werden zu diesem Zweck Behandlungen mit Waschungen oder Bädern, die u.a. Chlorid enthalten, angewendet.
Der Einsatz von Chlor ist heute wegen dessen kanzerogener Wirkung, der Umweltbelastung von Chlor haltigen Abwässern und dem negativen organoleptischen Chlor - Geschmack auf Lebensmitteln stark umstritten und unakzeptabel.
Chlorid verursacht zudem mikrobielle Resistenzen und die Wirkung von Chlorid ist deshalb ungewiss.
Andere Desinfektionsverfahren wie z. B. mit Heissdampf, haben Qualität mindernde Folgen.
Bestrahlung mit Gamma - Strahlung und mit der elektromagnetischen Puls - Methode sind vielfach verboten oder Bewilligungs- pflichtig und unterstehen der Deklarationspflicht.

Der Einsatz von Ozon ist eine neue Technologie, die seit dem 26. Juni 2001 in USA und auch in Japan etc. gestattet ist, die jedoch als allein angewandte Desinfektions - Methode ungenügende biocide Resultate zeigt.

US2003/0013401 beschreibt ein Verfahren zur Desinfektion von tierischen Lebensmitteln mittels des gleichzeitigen Einsatz von Gasen: Ozon, Sauerstoff, Argon und Kohlendioxid, Wasser und Ozon und Ultraschall.

Der Einsatz von UV - Strahlung wirkt nur, wo die Strahlung direkten Flächenkontakt mit dem zu desinfizierenden Produkt hat. Mikroben in Kavitäten oder an Unterseiten von Blättern oder Kelchen können mit UV - Licht nicht erreicht werden.

Der Einsatz von Ultraschall bewirkt das Aufreissen von Zellwänden und Plastiden.
Mikroben haben vielfach die Möglichkeit, solche Risse mit Hilfe von speziellen biologischen Überlebensstrategien zu reparieren.

Der alleinige Einsatz von Ultraschall ist deshalb für eine Sterilisation ungenügend.

Alle erwähnten Verfahren zeigen in der Einzelanwendung unbefriedigende Sterilisations - Ergebnisse.

### DARSTELLUNG DER ERFINDUNG

Aufgabe der Erfindung ist die Angabe eines neuen Verfahrens und dessen Technische Ausführung zur Kaltsterilisation und Haltbarmachung von Früchten und Gemüse, Landwirtschaftlichen- und Gärtnerischen- Produkten, Lebensmitteln und anderen Produkten mittels des gleichzeitigen Einsatzes von Vakuum, Ozon, Sauerstoff, Kohlendioxyd, Argon, UV-C Licht und Ultraschall

Der Erfinder hat in 10-jähriger Forschungsarbeit unter Labor - Bedingungen und im Industriellen Einsatz aufgezeigt, dass mit dem neuen Desinfektionsverfahren mittels spezieller chemisch und technisch innovativer Anwendungs - Kombination von Biociden ausgezeichnete mikrobielle Resultate bezüglich Asepsis und Haltbarkeit von Frisch - Lebensmitteln und anderen Produkten erzielt werden können.

### EINFÜHRUNG

### Ozon 03

Ozon, 03, ist die 3-atomige Form von Sauerstoff. Ozon ist hoch reaktiv und das stärkste bekannte Oxidationsmittel. Es ist 51 mal reaktiver als Chlorid und 3125 mal schneller in der Vernichtung von Mikroorganismen.

Ozon ist ein hoch unstabiles Molekül in Gasform, das in kurzer Zeit (ca. 20 Minuten) wieder in Sauerstoff O₂ zerfällt.

Ozon wird durch UV-C-Strahlung oder durch Corona Kathoden - Entladung mit ca. 7000 Volt erzeugt.

Ozon ist besser in Wasser löslich als Sauerstoff.

Ozon ist gasförmig, von bläulicher Farbe, stark riechend und mit 0.1 mg pro Liter Luft in permanenter Exposition unschädlich.

Ozon wirkt durch das Abspalten eines Sauerstoff - Atoms bei Kontakt mit organischen oder anorganischen Verbindungen und führt zu einer Oxidation, respektive Auflösung von Zellwänden und Membranen von Eukarionten, die zur Vernichtung von allen Pilzen, Bakterien, Viren, Sporen und Hefen führt und die den Tracheen -Atmungsapparat von Insekten verschliesst, lahm legt und folglich zu deren Tod führt.

Ozon kann die mehrschichtige Zellwandstruktur von Pflanzen nicht auflösen. Ozon kann somit nicht in die Pflanzen eindringen, ausser unter Langzeit Einwirkung durch die Atmungs-Stomata.

Ozon wirkt im kurzen Kontakt Prinzip und hat keine Systemische Wirkung.

Ozon hinterlässt keine Rückstände, da es in kürzerster Zeit wieder in Sauerstoff zerfällt.

Ozon hinterlässt wegen seiner kurzen Einwirkungsdauer keine Schäden auf Pflanzen oder Lebensmittel.

Ebenfalls verursacht Ozon keine Resistenzen bei Mikroben oder pflanzlichen Schädlingen.

Ozon ist nicht kanzerogen.

Ozon ist deshalb ein äusserst effektives Biocid gegen alle Pilze, Bakterien, Viren, Hefen, Biofilme, Protozoen und höhere Lebewesen wie kleine Insekten, Würmer, Spinnmilben und andere Schad - Parasiten.

Ozon ist seit dem 26. Juni 2001 von der Food and Drug Administration FDA In den USA als Zusatzstoff im Direktkontakt mit Lebensmitteln gestattet.

Ozon ist ebenfalls als Desinfektions - Produkt von der EPA (Environmental Protection Agency) in den USA gestattet.

### UV-C Licht

UV - C Licht, als elektromagnetische Direkt - Strahlung hat im Wellenbereich von 254 Nanometer optimale biocide Wirkung gegen Bakterien, Hefen, Viren und Insekten.

Die Strahlung bewirkt bei Mikroorganismen die Auflösung von Zell - Membranen und zerstört DNS Strukturen. Im Wellenbereich von 185 Nanometer erzeugt UV -C Strahlung Ozon, welches unter hoher Luftfeuchtigkeit hoch oxidative labile Hydroxilverbindungen erzeugt, die die Wirkung von Ozon als Biocid wesentlich verstärken. (mikrobielles Hürde - Prinzip)

UV-C Bestrahlung von Lebensmitteln ist seit 1997 von der FDA in den USA zugelassen und für pflanzliche Lebensmittel und Käse etc. ebenfalls in der Deutschen Strahlenschutzverordnung.

Für die Effizienz der UV-C Strahlung ist die Strahlen Dosis entscheidend, die in mW/sec/cm 2 (Milli Watt pro Sekunde pro Quadrat- Zentimeter bestrahlter Fläche) angegeben wird.

Die Dosis zur Eliminierung von Mikroorganismen beträgt vorzugsweise 4'000 bis 15'000 mW/sec/cm 2 (abhängig von Art)

Für Schadinsekten ca. 500'000 - 1'500'000 mW/sec (abhängig von Art.

### Kohlendioxyd

CO 2 wirkt auf aerobe Mikroorganismen und Insekten toxisch in einer Konzentration von mehr als 30% und verhindert die Multiplikation von Mikroorganismen bei einer Konzentration von 15 bis 20 % und mehr.

Gleichzeitig bewirkt CO 2 in hohen Konzentrationen von mehr als 4% die Reduktion der Zellatmung von Früchten und Gemüse und schliesst die Atmungs - Stomata, so dass Ozon - Gas nicht in die Pflanzlichen Zellen eindringen kann.

### Argon

Argon ist ein Edelgas und in einer Konzentration von vorzugsweise 10% als Katalysator aktiv und verstärkt die Wirkung von CO₂ und Ozon.

### Ultraschall

Ultraschall, erzeugt durch einen Transducer, mit einer Wellenlänge von min. 20 kHz (Kilo -Herz) bis 100 kHz (Kilo - Herz) zerstört Zellwände von Bakterien, Pilzen und Hefen und Plastiden und hat durch das Kavitations-Phänomen potenzierende Wirkung für die Desinfektionsgase und löst Biofilme auf Oberflächen im Sogprinzip.

### Vakuum

Die Anwendung von Vakuum unter 50 mbar (Millibar) reisst Zellwände von Mikroben und Insekten auf und unterstützt die Einwirkung von CO₂ und Ozon und UV - Licht.
Gleichzeitig bewirkt ein Vakuum die Impregnation und Penetration der injektierten Biocid - Gase in die zu desinfizierenden Produkte.

Die Erfindung des neuen Desinfektions- und Sterilisations - Verfahrens besteht im wesentlichen in der neuen Kombinationsanwendung von Ozon, Sauerstoff, Kohlendioxyd, Argon, UV-C-Licht, Ultraschall und Vakuum und der angewandten Technik mit der entsprechenden technischen Ausrüstung und speziellen Funktionsweise.

Im Hürdenprinzip werden Mikroben mehreren Biociden gleichzeitig ausgesetzt, so dass Abwehr- und Schutzmechanismen und Resistenzstrategien wegen Überbeanspruchung der Energie- und Abwehrsysteme zusammenbrechen und die Mikroben eingehen.

Das neue Sterilisations- und Haltbarkeitsverfahren besteht in einer ersten Ausführung aus folgenden Technischen Haupt - Komponenten:
1 A Vakuum - Tunnel mit hydraulischer Vacuum Kammer Deck - Haube und integriertem Transport - Band aus Quarz - Glas.
2 A Vakuum Pumpe mit elektrischen oder pneumatischen Vacuum- und Injektions - Ventilen für Frischluft.
3 A UV-C Lampen mit 185nm (Nanometer) in der Vacuum Röhre und 254 nm (Nanometer) im Vorlauf und Nachlauf Tunnel.
4 A Transportband aus Quarz Glas im Vorlauf- und Nachlauf - Tunnel
5 A Sauerstoff - Erzeuger (aus Luft im Schwingsieb Prinzip)
6 A Ozon - Gas Erzeuger mit Corona Kathoden Entladung und 65% Restsauerstoff
7 A Gastank für CO₂ (Kohlendioxyd) mit Manometern und mit Anschlussleitungen
8 A Gastank für Argon mit Manometern und Anschlussleitungen
9 A Gasmixer für Gase mit Druckregler und Manometer
10 A Evakuationspumpe für Injektionsgase
11 A Druckkessel für Injektionsgase zur Zwischenlagerung und Rückgewinnung mit Druckregler und Manometern
12 A Ventilator zur Unterdruckerzeugung im Vakuum Tunnel und zur Rest - Evakuation von Restgasen.
13 A Desinfektionsgas Ventilations Turbine in Vakuum Kammer
14 A Elektrische und pneumatische Steuerung mit Schaltschrank
15 A Gaskonzentrationsmessgeräte für Ozon, Sauerstoff, Kohlendioxyd, und Argon mit Sensoren in der Vakuum Kammer.
16 A Ultraschall - Transducer

In einer zweiten Anwendung des Verfahrens wird nur ein geringer Unterdruck von 600 bis 800 mbar mittels eines Evakuations - Gebläses erzeugt und die Desinfektionsgase werden im Wasser gelöst und die zu desinfizierenden Produkte im Tunnel im Fliesswasser und mit Sprühdüsen gewaschen und desinfiziert und anschliessend mit Luft oder Zentrifugen Trockner getrocknet.

Diese Anwendung kann im kontinuierlichen Fliessverfahren geschehen.

In dieser zweiten Anwendung der Erfindung sind vorzugsweise folgende technischen Haupt - Komponenten nötig:
1 B Immersion - Waschtunnel mit Transportband aus Quarz - Glas
2 B Ventilator - Gebläse zur Erzeugung eines Unterdruckes und zur Evakuation von aus dem Wasser austretenden Restgasen.
3 B UV-C Lampen mit 185 nm (Nanometer) Wellenlänge, angebracht im Tunnel.
4 B UV-C Lampen mit 254 nm (Nanometer Wellenlänge im Vor- und Nachlauf des Wasser - Tunnels.
5 B Sauerstofferzeuger (aus Luft im Schwingsieb Prinzip)
6 B Ozon Gas Erzeuger mit Corona Kathoden Entladung mit 65% Restsauerstoff
7 B Gastank für CO 2 mit Manometern und Anschlussleitungen
8 B Gastank für Argon mit Manometern und Anschlussleitungen
9 B Gasmixer für 3 Gase mit Druckregler und Manometer
10 B Wasserleitung mit Wasser Einlass - Hahn in den Waschtunnel
11 B Drainage - Leitung mit Wasser - Überlauf
12 B Wasserleitungen mit Wasserdüsen im Tunnel
13 B Druckluft Kompressor mit Leitungen im Tunnel - Wasserbad mit Wasser- Düsen zur Verwirbelung des Desinfektionswassers
14 B Wasser - Druckpumpe
15 B Wasserzirkulationspumpe mit Filter
16 B Venturi Gasinjektions - Ventil
17 B Gasinjektions- Mixer
18 B Expansionskessel
19 B Druckmesser vor und nach Expansionskessel
20 B Gaskonzentrations - Messgeräte mit Sonden im Wasser für Ozon, Sauerstoff, Kohlendioxyd und Argon
21 B Ventilations- Trockner oder Zentrifugal Trockner nach Wasch - Tunnel
22 B Elektrische Steuerung mit Schaltschrank und Programmier Display
23 B Ultraschall - Transducer

### AUSFÜHRUNG DER ERFINDUNG

Das Anwendungsverfahren beinhaltet für die Anwendung in der ersten Ausführung vorzugsweise folgende Haupt - Schritte:
1. Das zu desinfizierende Produkt gelangt im Batch - Verfahren über ein aus Quarz - Glas Elementen bestehendes Transportband in die Vacuum - Tunnel - Kammer. Das Transportband wird mit einem Excenter Rollenrüttler derart aufwärts und abwärts bewegt, dass sich das Transportgut unter den UV-C Lampen auf alle Seiten wendet und das UV-C Licht an alle Stellen und Teile des Sterilisationsgutes gelangen kann.
2. Wenn das Transportband im Vakuum Tunnel voll ist, wird die Vakuum Kammer mit dem der darüberliegenden Deckelhaube hydraulisch Luft dicht verschlossen.
3. Anschliessend wird über die Vakuum Pumpe ein Vakuum erzeugt, indem die Atmosphären - Luft abgezogen wird bis auf ein Niveau von vorzugsweise 50 bis 200 mbar (Milli bar).
4. Nach Erreichen des Vakuums wird das Gasgemisch aus Ozon, Sauerstoff, CO₂ und Argon automatisch in die Vakuum - Kammer injektiert bis zu einem Unterdruck von ca. 750 mbar. Die Konzentrationen der injektierten Gase sind vorzugsweise wie folgt: Ozon 15%, Sauerstoff 45%, Kohlendioxyd 30% und Argon 10%.
5. Während des Einströmens der Desinfektionsgase wird das zu desinfizierende Produkt mit Ultraschallwellen im Pulsverfahren mit einer Frequenz von min. k20 Hz (Kilo - Herz) in Intervallen von vorzugsweise 5 Sekunden beschossen.
6. Die Gase verweilen während ca. 30 Sekunden in der Kammer.
7. Anschliessend wird erneut ein Vakuum erzeugt und das Desinfektionsgas Gemisch über ein elektrisches oder pneumatisches Gasventil durch eine Kompressor - Pumpe in den Desinfektionsgas -Zirkulationskreis - Druckkessel abgezogen, wo die Gasmischung über einen Sensor gesteuerten Gasmixer wieder in der korrekten Konzentration aufbereitet wird.
   Der Druckkessel ist mit dem Gasmischer verbunden und gleicht Gaskonzentrationen je nach Einstellung über eine Sensorik automatisch aus.
8. Nach Evakuation der Desinfektionsgase wird die Vakuum Kammer mit Frischluft gelüftet, damit keine Resten der Desinfektionsgase zurückbleiben.
9. Anschliessend wird die Deckelhaube der Vakuum - Kammer hydraulisch angehoben. Der Desinfektionsprozess ist abgeschlossen.
10. Das desinfizierte Füllgut verlässt den Vacuum Tunnel automatisch und läuft auf einem Förder - Band aus Quarz -. Glas Elementen in einem UV-C Licht Tunnel bis zur Abfüllstation. Damit werden Sekundärinfektionen über die Luft am Produkt vermieden.
11. Das desinfizierte und sterile Endprodukt gelangt unmittelbar zur aseptischen Verpackungsstation, wo es hermetisch in Beutel, Schalen oder Kisten mit Folie verschweisst oder geschrumpft wird.

Das Anwendungsverfahren beinhaltet für die zweite Art der Anwendung in der Ausführung vorzugsweise die folgenden Hauptschritte:
1. Das zu desinfizierend Produkt gelangt in einem kontinuierlichen Prozessfluss - Verfahren über ein aus Quarz - Glas Elementen bestehendes Transportband in den Waschtunnel. Das Transportband wird mit einem Excenter - Rollenschüttler derart aufwärts und abwärts bewegt, dass sich das Transportgut unter den UV-C Lampen auf alle Seiten wendet und das UV-C Licht damit an alle Stellen und Teile des Sterilisationsgutes gelangen kann.
2. Im Waschtunnel, in dem mittels eines Extraktionsgebläses ein Unterdruck erzeugt wird, fällt das zu desinfizierende Produkt, im Immersions - Verfahren, in das mit Ozon, Sauerstoff, Kohlendioxyd und Argon angereicherte Wasser, wo es auf einem Quarz - Glas Band weiter transportiert wird. Duschen mit Wasserdüsen besprayen gleichzeitig solche Produkte, die auf der Wasseroberfläche aufschwimmen, so dass konstant ein inniger Kontakt mit dem Desinfektionswasser zu Stande kommt. Das Desinfektionswasser - Bad wird mittels Kompressionsluft aus verschiedenen Düsen so verwirbelt, dass das zu desinfizierende Produkt in der Immersion ständig im Wirbel mit den im Wasser gelösten Desinfektionsgasen in Kontakt kommt.
3. Der Desinfektionsprozess dauert je nach Produkt und Konzentration der im Wasser gelösten Desinfektions - Gase ca. 2 bis 6 Minuten und kann programmiert werden.
4. Vor und nach dem Wasserbad sind UV-C Lampen mit 185 nm (Nanometer) und 254 nm (Nanometer) in einem Lichttunnel angebracht.
5. Im und über dem Wasserbad im Desinfektionstunnel durchläuft das Produkt gleichzeitig einen Ultraschall - Ring, der Puls weise arbeitet mit einer Frequenz von vorzugsweise min. 20 bis 100 kHz. Dabei wird das Produkt gleichzeitig mit Ultraschall - Wellen beschossen und mit UV-C Licht bestrahlt und biociden Gasen ausgesetzt.
6. Das Tauchverfahren im Wasserbad der zu desinfizierenden Produkte kann entweder im Lose Zustand oder im Plastik - Kisten - Verfahren durchgeführt werden.
7. Nach der Passage durch den nassen Desinfektionstunnel gelangt das desinfizierte Produkt immer noch unter UV-C Bestrahlung auf dem Quarz - Glas Transportband in den sterilen Air Jet Lufttrockner oder einen Zentrifugal - Trockner.
8. Anschliessend wird das Produkt unter aseptischen Bedingungen verpackt.

Das neue Sterilisationsverfahren hat in Labor- und Industrie - Anwendung äusserst gute Resultate erzielt.

In 10.jähriger Forschungs- und Entwicklungsarbeit wurde das Verfahren zur technischen Markt - Reife gebracht.

Das neue Verfahren mit seiner spezifischen neuen Technischen Konzeption funktioniert nicht nur bei Lebensmitteln sondern auch bei z. B. pharmazeutischen und medizinischen Anwendungen Einwand frei.

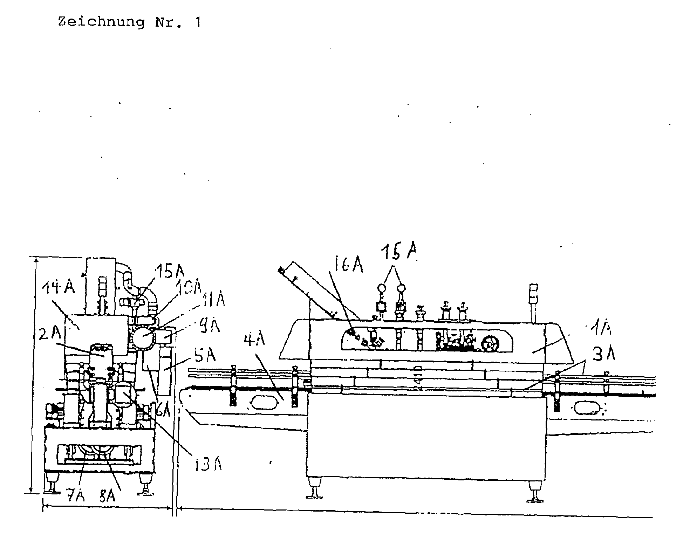

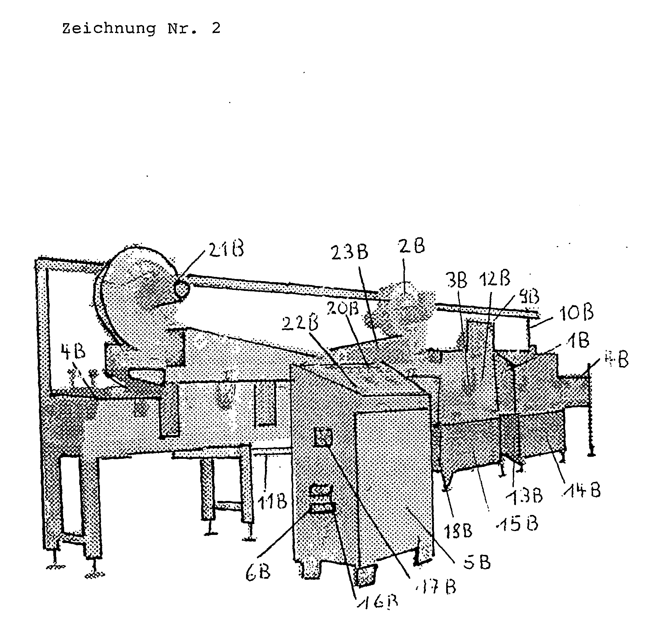

## Patentansprüche

1. Verfahren und Technische Ausführung zur Desinfektion und Haltbarmachung von Früchten und Gemüse, Lebensmitteln aller Art, Gärtnerischen und Landwirtschaftlichen Produkten und anderen Produkten mittels Begasung oder Waschung im Wasser unter Einsatz von Ozon, Sauerstoff, Kohlendioxyd und Argon und mittels gleichzeitiger Anwendung von UV-C Bestrahlung, Ultraschall und Vakuum.

2. Desinfektionsverfahren gemäss Anspruch 1, **dadurch gekennzeichnet, dass** die Anwendung sowohl in der Ausführung 1 als Begasung oder in der Ausführung 2 im Wasser - Waschverfahren erfolgen kann.

3. Desinfektionsverfahren gemäss den Ansprüchen 1 und 2, **dadurch gekennzeichnet, dass** in der Ausführung 1, im Batch - Verfahren, zusätzlich zu den Desinfektions - Gasen Ozon, Sauerstoff, Kohlendioxyd, Argon UV-C Bestrahlung und Ultraschall ein Vakuum erzeugt wird.

4. Desinfektionsverfahren gemäss den Ansprüchen 1 und 2, **dadurch gekennzeichnet, dass** in der Ausführung 2 im Produkte Prozessfluss - Verfahren im Wassertunnel zusätzlich zu den Desinfektionsgasen Ozon, Sauerstoff, Kohlendioxyd, Argon, UV-C Bestrahlung und Ultraschall nur ein Teil - Vakuum (Unterdruck) erzeugt wird.

5. Desinfektionsverfahren gemäss den Ansprüchen 1 bis 4, **dadurch gekennzeichnet, dass** die UV-C Bestrahlung der zu desinfizierenden Produkte gleichzeitig mit der Anwendung der Desinfektionsgase und dem Ultraschall sowohl im wie auch vor und nach dem Desinfektionstunnel in der Vakuum Kammer wie im Wasser - Bad stattfindet.

6. Desinfektionsverfahren gemäss den Ansprüchen 1 bis 5, **dadurch gekennzeichnet, dass** gleichzeitig mit der Anwendung der Desinfektionsgase und der UV-C Bestrahlung die zu desinfizierenden Produkte mit Ultraschall behandelt werden.

7. Desinfektionsverfahren gemäss den Ansprüchen 1, 2 und 3, **dadurch gekennzeichnet, dass** zur Technischen Ausführung der Ausführung 1 vorzugsweise folgende Haupt Komponenten und Geräte eingesetzt werden:
1 A Vakuum - Tunnel mit hydraulischer Deckelhaube und integriertem Transport - Band aus Quarz - Glas.
2 A Vakuum Pumpe mit elektrischen oder pneumatischen Vakuum- und Injektions - Ventilen für Frischluft.
3 A UV-C Lampen mit 185nm (Nanometer) in der Vakuum Röhre und 254 nm (Nanometer) im Vorlauf und Nachlauf Tunnel.
4 A Transportband aus Quarz Glas im Vorlauf- und Nachlauf - Tunnel
5 A Sauerstoff - Erzeuger (aus Luft im Schwingsieb Prinzip)
6 A Ozon - Gas Erzeuger mit Corona Kathoden Entladung und 65% Restsauerstoff
7 A Gastank für CO₂ (Kohlendioxyd) mit Manometern und Anschlussleitungen
8 A Gastank für Argon mit Manometern und Anschlussleitungen
9 A Gasmixer für Gase mit Druckregler und Manometer und Anschlussleitungen
10 A Evakuationspumpe für Injektionsgase und Leitungen
11 A Druckkessel für Injektionsgase zur Zwischenlagerung und Rückgewinnung mit Druckregler und Manometern inklusive Leitungen
12 A Ventilator zur Unterdruckerzeugung im Vakuum Tunnel und zur Rest - Evakuation von Restgasen inklusive Leitungen
13 A Desinfektionsgas Ventilations Turbine in Vakuum Kammer
14 A Elektrische und pneumatische Steuerung mit Schaltschrank und Programmierdisplay.
15 A Gaskonzentrationsmessgeräte für Ozon, Sauerstoff, Kohlendioxyd, und Argon mit Sensoren in der Vakuum Kammer.
16 A Ultraschall - Transducer

8. Desinfektionsverfahren gemäss den Ansprüchen 1, 2 und 4 **dadurch gekennzeichnet, dass** zur Technischen Ausführung der Ausführung 2 vorzugsweise folgende Haupt Komponenten und Geräte eingesetzt werden:
1 B Immersion - Waschtunnel aus beschichtetem Chromstahl mit Transportband aus Quarz - Glas
2 B Ventilator - Gebläse zur Erzeugung eines Unterdruckes und zur Evakuation von aus dem Wasser austretenden Restgasen.
3 B UV-C Lampen mit 185 nm (Nanometer) Wellenlänge, angebracht im Tunnel.
4 B UV-C Lampen mit 254 nm (Nanometer) Wellenlänge im Vor- und Nachlauf des Wasser - Tunnels.
5 B Sauerstofferzeuger (aus Luft im Schwingsieb Prinzip)
6 B Ozon Gas Erzeuger mit Corona Kathoden Entladung mit 65% Restsauerstoff
7 B Gastank für CO 2 mit Manometern und Anschlussleitungen
8 B Gastank für Argon mit Manometern und Anschlussleitungen
9 B Gasmixer für 3 Gase mit Druckregler und Manometer und Anschlussleitungen
10 B Wasserleitung mit Wasser Einlass - Hahn in den Waschtunnel
11 B Drainage - Leitung mit Wasser - Überlauf im Waschtunnel
12 B Wasserleitungen mit Wasserdüsen und Hahn im Tunnel
13 B Druckluft Kompressor mit Leitungen im Tunnel - Wasserbad mit Wasser- Düsen zur Verwirbelung des Desinfektionswassers
14 B Wasser - Druckpumpe mit Leitung
15 B Wasserzirkulationspumpe mit Filter und Leitung
16 B Venturi Gasinjektions - Ventil und Leitung
17 B Gasinjektions- Mixer mit Anschlussleitung
18 B Expansionskessel mit Anschlussleitung
19 B Druckmesser vor und nach Expansionskessel
20 B Gaskonzentrations - Messgeräte mit Sonden im Wasser für Ozon, Sauerstoff, Kohlendioxyd und Argon
21 B Ventilations- Trockner oder Zentrifugal Trockner nach Wasch - Tunnel
22 B Elektrische Steuerung mit Schaltschrank und Programmier - Display
23 B Ultraschall - Transducer

9. Desinfektionsverfahren gemäss den Ansprüchen 6, 7 und 8, **dadurch gekennzeichnet, dass** das Innere des Vakuum Gas Tunnels und des Wassertunnels mit speziellem PVC oder einem anderen geeigneten Material ausgekleidet ist für den problemlosen Ultraschall - Einsatz.

10. Verfahren und Technische Ausführung zur Desinfektion und Haltbarmachung von Lebensmitteln aller Art und anderen Produkten, gemäss Ansprüchen 1 bis 9 mittels Begasung oder Waschung unter Einsatz von Ozon, Sauerstoff, Kohlendioxyd und Argon und mittels gleichzeitiger Anwendung von UV-C Bestrahlung, Ultraschall und Vakuum oder Unterdruck unter Einsatz der beschriebenen spezifischen technischen Hauptkomponenten, Geräte und dem entsprechenden technischen Engineering.

## Claims

1. Process and technological implementation for the disinfection and conservation of fruits and vegetables, food stuff of all kinds, horticultural and agricultural products and other products by fumigation or washing in water with the use of Ozone, Oxygen, Carbondioxyde and Argon and with the simultaneous application of UV-C irradiation, Ultrasound and Vacuum.

2. Disinfection process, according to claim 1, **characterized in, that** the process can be implemented not only in the version 1 by fumigation but also in the version 2 by the water-washing process.

3. Disinfection process, according to claims 1 and 2, **characterized in, that** in the version 1, in the batch-process, a Vacuum is created, additional to the disinfection gases Ozone, Oxygen, Carbondioxyde, Argon, UV-C Irradiation and Ultrasound.

4. Disinfection process, according to the claims 1 and 2, **characterized in that** in the version 2, in the product-flow-process in the water-tunnel, in addition to the disinfection gases Ozone, Oxygen, Carbondioxyde, Argon, UV-C Irradiation and Ultrasound, only a partial vacuum (underpressure) will be established.

5. Disinfection process, according to claims 1 to 4, **characterized in, that** the UV-C irradiation of the products to be disinfected is happening at the same time with the application of the disinfection gases and the ultrasound as well inside, as before and after the disinfection tunnel, in the vacuum chamber, and in the water-bath.

6. Disinfection process, according to claims 1 to 5, **characterized in, that** the products to be disinfected, are treated as well with Ultrasound, simultaneously with the application of disinfection gases and UV-C irradiation.

7. Disinfection process, according to claims 1, 2 and 3, **characterized in, that** for the technical implementation of version 1 the following main components and equiptments are preferentially used:
1A Vacuum-tunnel with hydraulic vacuum-chamber-cover and integrated transport belt made from quartz-glass.
2A Vacuum pump with electrical or pneumatic vacuum- and injection valves for fresh air.
3A UV-C lamps with wave-length of 185nm (nanometer) in the vacuum tube and 254nm (nanometer) in the entry and exit area of the tunnel.
4A Transport belt made of quartz-glass in the entry- and exit-tunnel.
5A Oxygen generator (centrifuge strainer principle).
6A Ozone-generator with corona cathodic discharge and 65% remaining oxygen.
7A Gas-tank for CO2 (carbondioxyde) with manometers and connection-tubing.
8A Gas-tank for Argon with manometers and connection-tubing.
9A Gas-mixer for gases with pressure regulator and manometer.
10A Evacuation pump for injection-gases.
11A Pressure-vessel for injection-gases for the intermediate storage and gas-recovery with pressure regulator and manometers.
12A Ventilator to establish hypo baric conditions in the vacuum tunnel and for the evacuation of remaining gases.
13A Disinfection-gas ventilation turbine in vacuum chamber.
14A Electrical and pneumatic steering and control board.
15A Gas concentration measurement devices for Ozone, Oxygen, Carbondioxyde, and Argon with sensors in the vacuum chamber.
16A Ultrasound-Transducer.

8. Disinfection process, according to claims 1, 2, and 4, **characterized in, that** for the technical implementation of version 2, the following main components and equipment are preferentially used:
1B Immersion-washing tunnel made from coated stainless-steel with transport belt made from quartz-glass.
**2B Ventilator-fan to create hypo baric conditions and to evacuate rest-gases which** exit from the water.
**3B** UV-C Lamps with 185nm (nanometers) wave length, mounted in the tunnel.
**4B** UV-C Lamps with 254nm (nanometers) wave length, mounted in the entry and exit area of the water-tunnel.
5B Oxygen generator (from air by centrifuge strainer principle).
6B Ozone-generator with corona cathodic discharge and 65% remaining oxygen.
7B Gas-tank for CO2 (carbondioxyde) with manometers and connection-tubing.
8B Gas-tank for Argon with manometers and connection-tubing.
9B Gas-mixer for 3 gases with pressure-regulator and manometer and connection-tubing.
10B Water line with water inlet-valve in to the washing tunnel.
11B Drainage line with water siphon in the washing tunnel.
12B Waterlines with water-nozzles and value in the tunnel.
13B Pressure compressor with tubes in the tunnel-water-bath with water nozzles for swirling the disinfection-water.
14B Water pressure pump with tubing.
15B Water-circulation pump with filter and tubing.
16B Venturi gas-injection-valve and tubing.
17B Gas-injector mixer with connection tubing.
18B Expansion vessel with connection tubing.
19B Pressure manometer before and after the expansion vessel.
20B Gas-concentration sensing device with probes in water for Ozone, Oxygen, Carbondioxyde and Argon
21B Ventialtion-dryer or centrifugal dryer after washing tunnel.
22B Electrical steering with switch-control-board and programmable display.
23B Ultrasound-transducer.

9. Disinfection process, according to claims 6, 7, and 8, **characterized in that** the inner walls of the Vacuum-Gas-Tunnel and of the Water-Tunnel are equipped with a coating of a special PVC or another suitable material which allows the unproblematic use of Ultrasound.

10. Process and technical implementation for the disinfection and conservation of food stuff of all kinds, and other products, according to claims 1 to 9 by means of fumigation or washing, using Ozone, Oxygen, Carbondioxyde and Argon and by means of simultaneous applications of UV-C Irradiation, Ultrasound and Vacuum or Underpressure, with the use of the described specific technical main-components, equipments and the corresponding technical engineering.

## Revendications

1. Procédé et forme de réalisation technique pour la désinfection et la conservation de fruits et légumes, de produits agroalimentaires de toutes sortes, de produits horticoles et agricoles, et d'autres produits, au moyen d'un traitement par gaz ou d'un lavage à l'eau, par utilisation d'ozone, d'oxygène, de dioxyde de carbone et d'argon, et par utilisation simultanée d'une irradiation W-C, d'ultrasons et de vide.

2. Procédé de désinfection selon la revendication 1, **caractérisé en ce que** l'utilisation peut se faire aussi bien à l'étape 1 sous forme de traitement par gaz ou à l'étape 2 sous forme d'un procédé de lavage à l'eau.

3. Procédé de désinfection selon les revendications 1 et 2, **caractérisé en ce qu'**à l'étape 1, on crée un vide pendant le procédé batch en plus des gaz de désinfection ozone, oxygène, dioxyde de carbone et argon, et de l'irradiation UV-C et des ultrasons.

4. Procédé de désinfection selon les revendications 1 et 2, **caractérisé en ce qu'**à l'étape 2, on ne crée qu'un vide partiel (sous-pression) pendant le procédé de lavage des produits dans le tunnel à eau en plus des gaz de désinfection ozone, oxygène, dioxyde de carbone et argon, et de l'irradiation UV-C et des ultrasons.

5. Procédé de désinfection selon les revendications 1 à 4, **caractérisé en ce que** l'irradiation UV-C des produits à désinfecter a lieu en même temps que l'utilisation des gaz de désinfection et des ultrasons, aussi bien avant et après le tunnel de désinfection dans la chambre à vide que dans le bain d'eau.

6. Procédé de désinfection selon les revendications 1 à 5, **caractérisé en ce que** les produits à désinfectés sont traités par ultrasons en même temps que l'utilisation des gaz de désinfection et l'irradiation UV-C.

7. Procédé de désinfection selon les revendications 1, 2 et 3 **caractérisé en ce que** pour la réalisation technique de l'étape 1, on utilise de préférence les composants principaux et appareils suivants :
1A) un tunnel à vide avec couvercle de couverture hydraulique et bande de transport intégrée en verre de quartz,
2A) une pompe à vide avec vannes de vide ou d'injection électriques ou pneumatiques pour air frais
3A) des lampes UV-C à 185 nm (nanomètres) dans le tuyau à vide et à 254 nm (nanomètres) dans le tunnel en amont et en aval,
4A) une bande de transport en verre de quartz dans le tunnel en amont et en aval,
5A) un producteur d'oxygène (à partir de l'air selon le principe du tamis vibrant),
6A) un producteur d'ozone avec électrodes à décharge de corona et 65% d'oxygène résiduel,
7A) un réservoir de gaz pour le CO₂ (dioxyde de carbone) avec manomètres et conduites de raccordement,
8A) un réservoir de gaz pour l'argon avec manomètres et conduites de raccordement,
9A) un mélangeur de gaz avec un régulateur de pression, un manomètre et des conduites de raccordement,
10A) une pompe d'évacuation pour les gaz d'injection et des conduites,
11A) une cuve sous pression pour les gaz d'injection pour l'entreposage et le recyclage, avec régulateur de pression et manomètres, conduites comprises,
12A) un ventilateur pour la production de sous-pressions dans le tunnel à vide et pour l'évacuation des gaz résiduels, conduites comprises,
13A) une turbine de ventilation des gaz de désinfection dans la chambre à vide,
14A) un contrôle électrique et pneumatique avec armoire de commande et écran de programmation,
15A) des appareils de concentration de gaz pour l'ozone, l'oxygène, le dioxyde de carbone et l'argon, avec des capteurs dans la chambre à vide,
16A) un transducteur d'ultrasons.

8. Procédé de désinfection selon les revendications 1, 2 et 4, **caractérisé en ce que** pour la réalisation technique de l'étape 2, on utilise de préférence les composants principaux et appareils suivants :
1B) un tunnel de lavage par immersion en acier chromé avec une bande de transport en verre de quartz,
2B) un ventilateur pour la production d'une sous-pression et pour l'évacuation des gaz résiduels qui sortent de l'eau,
3B) des lampes UV-C de longueur d'onde 185 nm (nanomètres) introduites dans le tunnel,
4B) des lampes UV-C de longueur d'onde 254 nm (nanomètres) en amont et en aval du tunnel à eau,
5B) un producteur d'oxygène (à partir de l'air selon le principe du tamis vibrant),
6B) un producteur d'ozone avec électrodes à décharge de corona et 65% d'oxygène résiduel,
7B) un réservoir de gaz pour le CO₂ (dioxyde de carbone) avec manomètres et conduites de raccordement,
8B) un réservoir de gaz pour l'argon avec manomètres et conduites de raccordement,
9B) un mélangeur pour 3 gaz avec un régulateur de pression, un manomètre et des conduites de raccordement,
10B) une conduite d'eau avec robinet d'admission d'eau dans le tunnel de lavage,
11B) une conduite de drainage avec trop-plein d'eau dans le tunnel de lavage,
12B) des conduites d'eau avec buses et robinet dans le tunnel,
13B) un compresseur de pression d'air avec conduites dans le bain d'eau du tunnel avec buses pour faire tourbillonner l'eau de désinfection,
14B) une pompe à eau pressurisée avec conduite,
15B) une pompe de recirculation d'eau avec filtre et conduite,
16B) une vanne Venturi d'injection de gaz avec conduite,
17B) un mélangeur de gaz d'injection avec conduite de raccordement,
18B) une cuve de détente avec conduite de raccordement,
19B) des manomètres avant et après la cuve de détente,
20B) des appareils de mesure des concentrations de gaz avec sondes dans l'eau pour l'ozone, l'oxygène, le dioxyde de carbone et l'argon,
21B) un sécheur à ventilation ou un sécheur à centrifugation après le tunnel de lavage
22B) un contrôle électrique avec armoire de commande et écran de programmation,
23B) un transducteur d'ultrasons.

9. Procédé de désinfection selon les revendications 6, 7 et 8, **caractérisé en ce que** l'intérieur du tunnel à gaz sous vide et du tunnel à eau est recouvert d'un PVC spécial ou d'un autre matériau approprié afin d'utiliser les ultrasons sans problèmes.

10. Procédé et forme de réalisation technique pour la désinfection et la conservation de produits agroalimentaires de toutes sortes et d'autres produits selon les revendications 1 à 9 au moyen d'un traitement par gaz ou d'un lavage à l'eau, par utilisation d'ozone, d'oxygène, de dioxyde de carbone et d'argon, et par utilisation simultanée d'une irradiation W-C, d'ultrasons et de vide ou d'une sous-pression en utilisant les composants principaux et appareils spécifiques décrits et l'ingénierie technique correspondante.
